# EUROPEAN PATENT APPLICATION

(11) **EP 0 531 587 A1**
(43) Date of publication of application: **17.03.1993**
(21) Application number: 91308271.5
(22) Date of filing: 11.09.1991
(51) Int. Cl.: B01D 17/02, C02F 1/26

(54) **Method and system for separating lipophilic substances**

(71) Applicant: ZAIDAN HOJIN NANYO KYOKAI, Chiyoda-ku, Tokyo (JP)
(72) Inventor: Oshima, Katsutoshi, Itabashi-ku, Tokyo (JP)
(74) Representative: Browne, Robin Forsythe, Dr.

(57) **Abstract**

System and method for separating lipophilic substances which may be either contaminants or useful substances contained in a liquid medium by means of a floating filter layer consisting of particles or flakes of irregular shapes. Oil matters covering the surfaces of such particles or flakes catch lipophilic substances contained in a liquid medium, and the oil matters are eventually removed from the floating filter layer either spontaneously through a supply of fresh oil matters from the liquid medium or intentionally by supplying fresh oil matters to the floating filter layer. The removed oil matters are either discarded along with the undesirable substances with which they are impregnated or further processed to obtain useful substances contained therein. Optionally, the oil matters may be recycled.

## Description

### TECHNICAL FIELD

The present invention relates to method and system for separating lipophilic substances such as trace minerals, trace toxic substances and odorous substances contained in water, soil, mineral ores, sludges or the like.

### BACKGROUND OF THE INVENTION

Methods of processing waste water with a waste water processing system comprising a body of waste water, and an floating filter layer disposed above the waste water body and consisting of floating plastic pieces having a specific weight less than that of water are described in US Patent No. 4,115,266 issued September 19, 1978 to the Inventor of the present application.

In recent years, removal of harmful substances is becoming an increasingly important task. Such harmful substances include certain chemical compounds such as trichlene, 1.1.1-trichrolethane, environmentally destructive substances such as certain flons and carbon tetrachloride, toxic substances such as PCB and dioxin, odorous substances such as methylmercaptan, dimethylsulfide and amines, and heavy metals.

These harmful substances are generally lipophilic substances, and the heavy metals may also be considered as lipophilic as they can be made so by formation of complexes. The term "lipophilic" is meant as the property of a material having an affinity with oils or oil-like substances in general. Such oils or oil-like substances may include mineral oils, vegetable oils, animal fats, and other substances which may not be considered as oil as long as they can be readily separated from water and serve the purpose of the present invention.

Such lipophilic substances and substances which are made lipophilic typically exist in water and soil in very small quantities, and are often absorbed into human bodies through utility water and edible living bodies. These substances are often accumulated in human bodies thereby causing various forms of illness, and can cause public nuisances because of their high levels of obnoxious odor.

Elimination of such toxic or odorous substances using anaerobic processes has been barely started. Removal of odorous substances has been attempted by stripping and application of oxidizers. In either case, however, no complete solution has been found. Removal of contaminants which may be toxic or odorous combining a floating filter filtration and an anaerobic process is proposed in copending US patent application of even date which is herein incorporated by reference.

The difficulty is centered around the fact that such substances exist in extremely small quantities and are often resistant to decomposition.

### BRIEF SUMMARY OF THE INVENTION

In view of such problems of the prior art, a primary object of the present invention is to provide method and system for extracting lipophilic substances existing in extremely small quantities from water, soil or other media.

A second object of the present invention is to provide economical and efficient method and system for separating toxic or otherwise environmentally harmful substances from water, soil or the like.

A third object of the present invention is to provide economical and efficient method and system for extracting useful substances existing in extremely small quantities from water, soil, mineral ores or the like.

These and other objects of the present invention can be accomplished by providing A system for separating lipophilic substances from a liquid medium, comprising: a vessel provided with an inlet and an outlet for inflow and outflow of a liquid medium into and out of said vessel, respectively; a floating filter layer separating the interior of said vessel into two parts communicating with said inlet and said outlet, respectively, said floating filter layer consisting of pieces, particles or flakes of material having a true or apparent specific gravity substantially equal to or less than that of said liquid medium; means for keeping said floating filter layer within a prescribed part of said inner chamber; and means for collecting a layer of oil forming in an upper part of said liquid medium. Such objects may be achieved by providing a method of separating lipophilic substances from liquid medium, comprising the steps of: forming a floating filter layer in a vessel with pieces, particles or flakes of material having a true or apparent specific gravity substantially equal to or less than that of said liquid medium; impregnating said floating filter layer with oil by forming a film of oil on the surfaces of said pieces, particles or flakes; passing said liquid medium through said floating filter layer; and collecting said oil removed from said floating filter layer.

The oil which may be used for this purpose, preferably but not limitatively, consists of such substances as naphtha, kerosene, normal hexane, and other mineral oils which have a small specific weight and a favorable phase solubility. The floating filter layer receives a supply of oil either from the liquid medium itself or from an external source.

According to the present invention, waste liquid, waste water or utility water containing such trace substances may eventually saturate the floating layer with lipophilic substances and substances which are made lipophilic if there is no continuous supply of an oil matter. In such a case, by supplying a quantity of oil matter from the inlet in the lower part of the processing vessel and pushing the contaminated excess oil matter upwards, thereby carrying the lipophilic substances along with it. It is then possible to process this excess oil and separate the lipophilic substances such as trace toxic and odorous substances from the processed oil.

By further treating the lipophilic substances and the substances which are made lipophilic with anaerobic bacteria which are effective in decomposing them after these substances are substantially reduced, the removal process can be made highly complete.

The selection of either the upward flow or the downward flow in implementation of the method of the present invention depends on their degrees of effectiveness in relation with the amount of SS (suspended solids) in the exhaust liquid, the turbidity, and the content of oil matters in each case.

### BRIEF ESCRIPTION OF THE DRAWINGS

Now the present invention is described in the following with reference to the appended drawings, in which:
Figures 1 and 2 are diagrams showing different examples of the systems which may be used for the method of the present invention; and
Figure 3 is a diagram showing a preferred embodiment of the present invention constructed as a closed system.

### DETAILED DESCRIPTION OF THE PREFERRED EMBODIMENTS

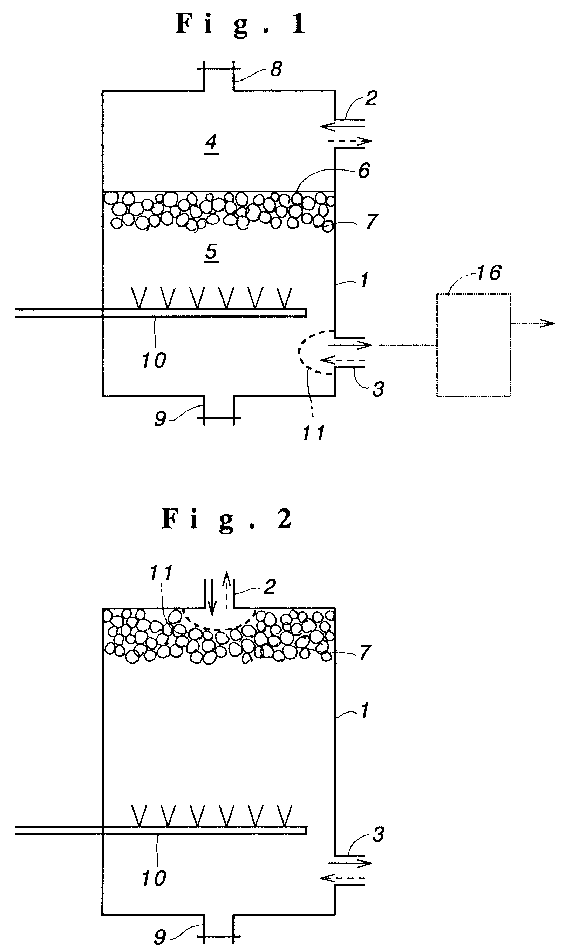

Figure 1 shows a first embodiment of the system for separating lipophilic substances according to the present invention. This system comprises a cylindrical vessel 1 which is provided with an inlet 2 defined in a side wall portion of an upper part of the vessel 1, and an outlet 3 defined in a side wall portion of a lower part of the vessel 1. The interior of the vessel 1 is separated into an upper chamber 4 and a lower chamber 5 by a sieve or grid 6 consisting of wire mesh extending over the entire cross section of the vessel 1.

This grid 6 confines a floating filter layer 7 formed by particles or flakes made of a substance, preferably having an affinity with oil matters, such as atactic polypropylene, atactic ethylene propylene copolymer, porous polyethylene, tactic polypropylene, styrene foam, urethane polymer flakes, urethane foam pieces and other plastic materials having a true or apparent specific weight substantially equal to or less than that of the waste liquid, immediately below this grid 6. These particles or flakes are irregularly shaped so that formation of straight paths for the liquid medium may be avoided, and a favorable contact between the surfaces of the particles or flakes and the liquid medium may be achieved. To achieve a favorable contact between the surfaces of the particles forming the floating filter layer 7 and the contaminants, the particles of the floating filter layer are allowed to move freely insofar as allowed by the grid 6. The outlet 3 is provided with a screen 11 made of wire mesh for preventing the particles of the substance forming the floating filter layer 7 from being washed out of the vessel 1. Sludge and other heavy substances are removed from the vessel 1 via a bottom outlet 9 provided in a bottom wall of the vessel 1.

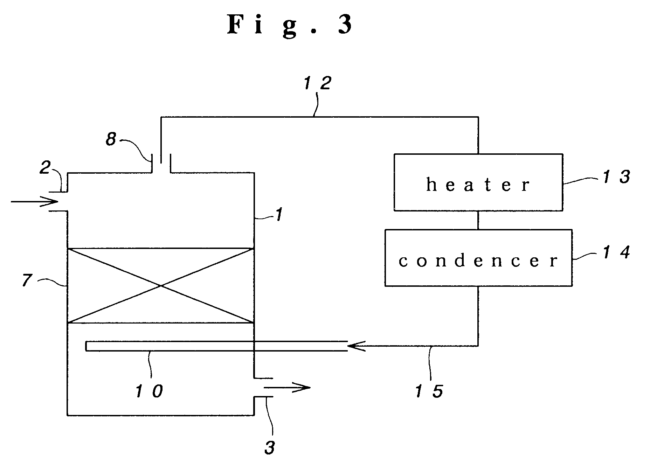

The inlet 2 may define a certain angle relative to the radial line as seen on a horizontal plane of projection so that a favorable contact between the surfaces of the particles forming the floating filter layer 7 and the contaminants may be achieved without increasing the flow rate of the waste liquid flowing through the vessel 1. As shown in Figure 1, the lower chamber 5 is substantially larger than the upper chamber 4. However, the floating filter layer 7 may extend to the uppermost part of the vessel 1 as is the case with the embodiment illustrated in Figure 2 in which the parts corresponding to those of the first embodiment are denoted with like numerals. Numeral 16 denotes a vessel for carrying out an anaerobic process connected to the outlet 3 of the vessel 1, for purifying the liquid medium even further by decomposing the trace organic substances which may be still left after the process carried out in the vessel 1.

For other details and possible variations of this floating filter layer, reference is made to the aforementioned US Patent No. 4,115,266 which is herein incorporated by reference.

The floating filter layer 7 is initially saturated by oil, such as kerosene, naphtha, or other mineral oil, and the surfaces of the particles forming the floating filter layer 7 are substantially covered by this oil. The liquid from which lipophilic substances are to be separated is introduced into the upper chamber 4 from the inlet 2, and is passed through the floating filter layer 7. The oil with which the floating filter layer 7 is impregnated may preferably consist of medium to light petroleum and other mineral oil, but other equivalent substances may be used for the oil even though they may not be generally regarded as oil in ordinary sense as long as they can extract and absorb desired substances from liquid medium by contact therewith.

If the liquid medium contains oil, it will also adhere to the surfaces of the particles of the floating filter layer 7, and the excess oil is eventually separated from the floating filter layer 7. The separated oil forms a layer on the upper surface of the liquid medium, and this oil layer contains the lipophilic substances in a relatively high concentration. The lipophilic substances are either discarded along with the oil or are separated from the oil by suitable means for useful purpose.

If the liquid medium does not contain any substantial amount of oil therein, fresh oil may be introduced into the liquid medium, for instance from backwash pipes 10, so that it may mix with the oil already contained in the floating filter layer 7. This causes the excess oil to be separated from the floating filter layer 7, and the separated oil can be processed as mentioned above.

In the above description, the flow was generally directed downward as indicated by solid arrows, but, depending on the nature of the liquid medium and the substances that are to be separated therefrom, the direction of the flow may be reversed and directed generally upward as indicated by the dotted arrows.

Figure 3 shows a third embodiment of the present invention which allows the oil to be recycled. According to this embodiment, the oil which may consist of naptha or other light mineral oil obtained from an upper end of the vessel 1 which may be identical to the vessel 1 illustrated in Figure 1 is supplied to a heater 13 via a conduit 12, and the substances which are to be separated from the oil matter are separated from the oil matter by evaporating the latter. The vapor of the oil matter is then cooled by a condenser 14, and converted into liquid. The oil matter in liquid form is then returned, via a conduit 15, into the vessel 1 through the backwash pipes 10. Therefore, according to this embodiment, even when the liquid medium does not contain substantially any oil matter, it is possible to operate the system virtually without supplying any fresh oil matter.

### Example 1

### Processing of waste water from a laundry plant

A dry cleaning process involved the release of trichrolethylene in the waste water after the solvent is removed therefrom by the amount of approximately 9 mg/liter. A test was conducted in a vessel 100 mm in diameter and 2 m in height with a floating layer 0.8 m deep consisting of particles in 7 to 15 mm in diameter by using a downward flow at the rate of 3 m/hour. The impregnating oil was kerosene.

**Table 1**

| Substance | before treatment | after treatment |
|---|---|---|
| trichrolethylene | 9 mg/liter | 0.1 mg/liter or less |

### Example 2

### Removal of odor from waste water of a pulp plant

Since pulp waste water involves a strong odor even with an extremely small amount of residual substances, the test conducted involved two stages of treatment. The first stage was carried out in a vessel which was 200 mm in diameter and 2 m in height using floating filter particles approximately 10 mm in diameter for a floating filter layer, and the second stage was carried out in a vessel which was 200 mm in diameter and 2.5 m in height using floating filter particles approximately 3 mm in diameter. The height or the depth of the floating filter layer was approximately 1 m in each case. The flow rate was 5 m/hour and the impregnating oil consisted of kerosene.

**Table 2**

| Substances | before treatment | after treatment |
|---|---|---|
| H₂S | 5 to 10 mg/liter | 2 to 3 mg/liter |
| CH₃SH | 10 to 20 mg/liter | 0.9 to 1.0 mg/liter |
| (CH₃)₂S | 20 to 30 mg/liter | 3 to 7 mg/liter |

### Example 3

### Extraction of uranium from uranium ore

In a test to extract uranium from uranium ore, the ore was made acidic to the level of pH 1 with sulphuric acid to improve its water solubility, and uranium was extracted therefrom as lipophilic amine complex with kerosene. The flow rate was 14.25 m/hour.

**Table 3**

| Substances | before treatment | after treatment |
|---|---|---|
| oil matters | 553 mg/liter | 109.2 mg/liter* |
| amine complex | 46 mg/liter | 1.63 mg/liter |

| | | |
|---|---|---|
| (* - including a dissolved content of 100 mg/liter) | | |

This method allowed efficient extraction of uranium contained in uranium ore in an extremely small quantity.

### Example 4

### Removal of fatty substances from chrome tanning liquid

Chrome tanning is widely used for tanning cowhide and pigskin, and the chromium liquid has to be discarded after tanning because it is contaminated by fatty substances by the amount of as much as 20,000 mg/liter or more. Since these fatty substances have a specific weight close to unity, they could not be easily separated. Therefore, the filter material was impregnated with naphthenic acid. The flow rate was 5 m/hour.

**Table 4**

| Chromium circulation liquid | | |
|---|---|---|
| Substance | before treatment | after treatment |
| oil matters | 21,000 mg/liter | 50 mg/liter |

By using the method of the present invention, it was made possible to remove the fatty substances, and to reuse the chromium liquid.

Although the present invention has been described in terms of specific embodiments, it is possible to modify and alter details thereof without departing from the spirit of the present invention.

## Claims

1. A system for separating lipophilic substances from a liquid medium, comprising:
a vessel provided with an inlet and an outlet for inflow and outflow of a liquid medium into and out of said vessel, respectively;
a floating filter layer separating the interior of said vessel into two parts communicating with said inlet and said outlet, respectively, said floating filter layer consisting of pieces, particles or flakes of material having a true or apparent specific gravity substantially equal to or less than that of said liquid medium;
means for keeping said floating filter layer within a prescribed part of said inner chamber; and
means for collecting a layer of oil forming in an upper part of said liquid medium

2. A system according to claim 1, further comprising means for supplying fresh oil to said floating filter layer.

3. A system according to claim 2, wherein said oil consists of mineral oil.

4. A system according to claim 2, wherein said oil consists of one or more materials selected from a group of materials including kerosene, naptha, and normal hexane.

5. A system according to claim 1, further comprising means for separating said lipophilic substances from said oil.

6. A system according to claim 5, wherein said separating means comprises a heater for vaporising said oil, and a condenser for condensing said vaporized oil into liquid oil which is subsequently returned to said floating filter layer.

7. A system according to claim 1, wherein said pieces, particles or flakes of said material forming said floating filter layer are irregularly shaped, and are received in said vessel in a freely moveable manner.

8. A system according to claim 1, wherein said vessel is provided with an oil outlet for removing said oil from an upper part of said liquid medium.

9. A system according to claim 1, further comprising a region for carrying out an anaerobic process on said liquid medium expelled from said outlet of said first mentioned vessel.

10. A method of separating lipophilic substances from liquid medium, comprising the steps of:
forming a floating filter layer in a vessel with pieces, particles or flakes of material having a true or apparent specific gravity substantially equal to or less than that of said liquid medium;
impregnating said floating filter layer with oil by forming a film of oil on the surfaces of said pieces, particles or flakes;
passing said liquid medium through said floating filter layer; and
collecting said oil removed from said floating filter layer.
